# EUROPEAN PATENT APPLICATION

(11) **EP 2 595 115 A1**
(43) Date of publication of application: **22.05.2013**
(21) Application number: 12193172.9
(22) Date of filing: 19.11.2012
(51) Int. Cl.: G06T 11/00

(54) **Method and apparatus for X-ray scattering estimation and reconstruction in digital tomosynthesis system**

(30) Priority: 18.11.2011 US 201161561341 P; 27.08.2012 KR 20120093467
(71) Applicant: Samsung Electronics Co., Ltd, Gyeonggi-do 443-742 (KR)
(72) Inventor: Lee, Jong Ha, 443-742 Gyeonggi-do (KR); Kim, Kyung Sang, 443-742 Gyeonggi-do (KR); Sung, Young Hun, 443-742 Gyeonggi-do (KR); Ye, Jong Chul, 443-742 Gyeonggi-do (KR); Jang, Kwang Eun, 443-742 Gyeonggi-do (KR)
(74) Representative: Grünecker, Kinkeldey, Stockmair & Schwanhäusser

(57) **Abstract**

A method and apparatus for X-ray scattering estimation and reconstruction in a digital tomosynthesis system are provided. The apparatus includes a receiver which receives, through a wired or wireless network, X-ray penetration data generated by measuring an object, and a graphics processing unit (GPU) which acquires, from the received X-ray penetration data, a reconstructed image in which scattering is corrected.

## Description

### BACKGROUND

### 1. Field

Methods and apparatuses consistent with exemplary embodiments relate to X-ray scattering estimation and reconstruction in a digital tomosynthesis system, and more particularly, to a method and apparatus that estimates X-ray scattering by using a simulation with a speed increased to a clinically available level.

### 2. Description of the Related Art

When radiographic testing is performed on an object, X-radiation (X-ray) is emitted from an X-ray source to the object.

When the X-ray is used to generate an image of the object, a part of the radiation, namely direct radiation, may pass through the object directly without any interference by the X-ray source, and the radiation may reach an X-ray detector, so that an X-ray image may be generated on a photosensitive film or another appropriate detector.

A part of the direct radiation is differentially absorbed by the object and a shadow of the object is generated on the photosensitive film or detector. However, another part of the radiation may not be absorbed by the object and is instead scattered. The scattered radiation may reach the X-ray detector at an angle that is significantly deviated from an original path of a part of the radiation from the X-ray source.

The scattered radiation may overlap with the radiation absorbed by the object (e.g. an absorption image) and form a veil. Due to the overlap between the scattered radiation and the absorbed radiation, a contrast of a produced radiographic image may be reduced.

Currently, in order to compensate for the reduced contrast due to the scattered radiation, a radiation dose for the object is increased to create a radiographic image with clearer contrast.

When the scattered radiation is reduced or removed, contrast of an image may be enhanced since the scattered radiation does not interfere with the direct radiation. Also, when the scattered radiation is reduced or removed, a single radiation dose for each object, for example a patient, can be reduced since there is no scattered radiation interfering with the production of the X-ray image.

In addition, contrast of an image may be enhanced with only a small radiation dose.

Recently, in order to reduce the amount of radiation scattering, an X-ray scattering prevention grid is used. Typically, a scattering prevention grid is geometrically arranged, and is fabricated with a spacer material, such as a nonabsorbent fiber, between a thin sheet formed of an X-ray absorption material used to absorb scattered radiation, and an absorbent sheet that permits direct radiation to pass through the scattering prevention grid.

However, it is often difficult to completely remove the scattered radiation using the scattering prevention grid. The scattering prevention grid may absorb some of the radiation emitted towards an object and accordingly, the radiation may not reach a target object for radiography. Additionally, due to the scattering prevention grid, an image artifact may appear on the X-ray image. Furthermore, when the scattering prevention grid absorbs the emitted radiation, a high level of radiation must be emitted in order to maintain a constant signal-to-noise ratio (SNR) in a detector. Accordingly, a radiation dose for a patient would also have to be increased in order to obtain an accurate X-ray image.

### SUMMARY

According to exemplary embodiments, there is provided an apparatus for X-ray scattering estimation and reconstruction, including a receiver which receives X-ray penetration data through a wired or wireless network, wherein the X-ray penetration data is generated by measuring an object, and a graphics processing unit (GPU) which acquires, from the received X-ray penetration data, a reconstructed image in which scattering is corrected.

The GPU may comprise at least one core to process in parallel at least one of movement, scattering and detection of at least one photon generated from an X-ray generator, and wherein the at least one photon is assigned to the at least one core.

The at least one core may control movement of the at least one photon from the X-ray generator to the object.

The at least one core randomly determines a movement distance which indicates an amount of movement of the at least one photon in the object.

Preferably, the at least one core determines an amount of photoelectric absorption, and controls the movement of the at least one photon and/or the at least one core determines an amount of scattering of the at least one photon.

The at least one core randomly may compute a scattering angle of the at least one photon, update a three-dimensional (3D) direction vector based on the computed scattering angle, calculate a Compton scattering value and a Rayleigh scattering value using the updated 3D direction vector, and generate scattering data based on the calculated Compton scattering value and the calculated Rayleigh scattering value.

The at least one core may calculate a location of the at least one photon received by a detector, based on a result of the processing the scattering.

The at least one core may determine whether the at least one photon is scattered, and when the at least one photon is determined to be scattered, store scattering data of the at least one photon.

Preferably, the at least one core stores scattering information of the at least one photon, determines whether the at least one photon is scattered based on the stored scattering information, and if the at least one photon is determined to be scattered, stores the scattering data.

Preferably, the GPU acquires an image from the received X-ray penetration data, and performs a simulation on the acquired image.

The GPU may generate an X-ray scattering image from the image on which the simulation is performed, and correct the X-ray penetration data based on the generated X-ray scattering image.

The GPU may acquire the reconstructed image from the corrected X-ray penetration data.

The GPU may compare the X-ray penetration data with prompt data acquired through the simulation, calculate a scale constant, adjust a scale of received scattering data, subtract the received scattering data from the X-ray penetration data, and correct scattering.

Preferably, the GPU generates the X-ray scattering image from the acquired image, and corrects the X-ray penetration data based on the generated X-ray scattering image.

According to exemplary embodiments, there is provided a method for X-ray scattering estimation and reconstruction, including receiving X-ray penetration data through a wired or wireless network, wherein the X-ray penetration data is generated by measuring an object, acquiring an initial image from the received X-ray penetration data, performing a simulation on the acquired initial image, generating an X-ray scattering image from the initial image on which the simulation is performed, correcting the X-ray penetration data based on the generated X-ray scattering image, and acquiring, from the corrected X-ray penetration data, a reconstructed image in which scattering is corrected.

The method may further comprise the steps of assigning at least one photon to at least one core, wherein the at least one photon is virtually generated from an X-ray generator; and processing, using the at least one core, in parallel at least one of movement, scattering and detection of the at least one photon.

The invention also provides a non-transitory computer readable recording medium storing a program to cause a computer to implement the method according to the invention.

### BRIEF DESCRIPTION OF THE DRAWINGS

The above and other aspects of exemplary embodiments will become apparent and more readily appreciated from the following detailed description of certain exemplary embodiments, taken in conjunction with the accompanying drawings of which:

FIG. 1 is a block diagram illustrating an X-ray scattering estimation and reconstruction apparatus using X-ray scattering data according to an exemplary embodiment;

FIG. 2 is a flowchart illustrating an X-ray scattering estimation and reconstruction method using X-ray scattering data according to an exemplary embodiment;

FIG. 3 is a flowchart illustrating a simulation according to an exemplary embodiment;

FIG. 4 is a flowchart illustrating an operation of determining scattering of a photon in the simulation of FIG. 3 according to an exemplary embodiment; and

FIG. 5 is a flowchart illustrating a scheme of adjusting a scale of X-ray scattering data according to an exemplary embodiment.

### DETAILED DESCRIPTION

Reference will now be made in detail to exemplary embodiments, examples of which are illustrated in the accompanying drawings, wherein like reference numerals refer to the like elements throughout. Exemplary embodiments are described below in order to explain the present disclosure by referring to the figures.

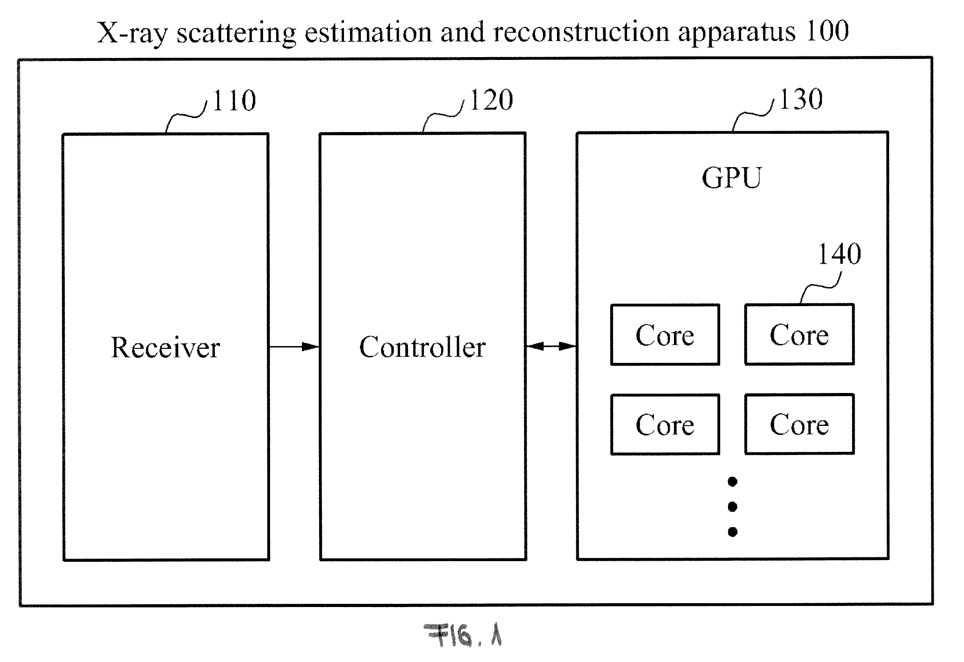

FIG. 1 is a block diagram illustrating an X-ray scattering estimation and reconstruction apparatus 100 using X-ray scattering data according to an exemplary embodiment. The X-ray scattering estimation and reconstruction apparatus 100 can be, for example, a component of a system used for performing tomosynthesis. A digital tomosynthesis system can include the X-ray scattering estimation and reconstruction apparatus 100, an X-ray source and an X-ray detector.

Referring to FIG. 1, the X-ray scattering estimation and reconstruction apparatus 100 includes a receiver 110, a controller 120, and a graphics processing unit (GPU) 130.

The GPU 130 may include at least one core 140.

The receiver 110 may receive X-ray penetration data via a wired or wireless network. For example, the wired/wireless network may be an internet network. The X-ray penetration data is generated by measuring an object.

The Object receives an X-ray emitted from an X-ray source during processing of radiography. When the X-ray is used to generate an image of the object, a part of the radiation, namely direct radiation, may pass through the object directly without any interference by the X-ray source, and the radiation may reach an X-ray detector, so that an X-ray image may be generated on a photosensitive film or another appropriate detector.

The object can be, for example, a part of a human body or part of an animal, but is not limited thereto and can be applied to any object to which an X-ray is applied.

The controller 120 may be interpreted as a Central Processing Unit (CPU), and may control various operations or communications between components. The CPU can execute a program and can include a non-volatile memory, such as read only memory (ROM) or a volatile memory, such a random access memory (RAM), to store the program.

The GPU 130 may acquire, from the received X-ray penetration data, a reconstructed image in which scattering is removed and corrected.

Specifically, the GPU 130 may acquire an initial image from the received X-ray penetration data, and may perform an X-ray simulation on the acquired initial image.

Subsequently, the GPU 130 may generate an X-ray scattering image from the initial image on which the simulation is performed, and may correct the X-ray penetration data based on the generated X-ray scattering image.

Additionally, the GPU 130 may acquire the reconstructed image from the corrected X-ray penetration data.

The GPU 130 may compare the X-ray penetration data with prompt data acquired through the simulation, may calculate a scale constant, and may adjust a scale of received scattering data. Prompt data can be, for example, an image in which an X-ray is not scattered or a scattering-corrected projection image. Subsequently, the GPU 130 may subtract the received scattering data from the X-ray penetration data, and may correct scattering.

The GPU 130 may generate the X-ray scattering image from the acquired initial image, and may correct the X-ray penetration data based on the generated X-ray scattering image.

Accordingly, the GPU 130 may include the at least one core 140.

The core 140 may perform, in parallel, processing of graphics and processing of a numerical formula. Specifically, at least one photon virtually generated from an X-ray generator may be assigned to the core 140. The core 140 may process in parallel at least one of movement, scattering and detection of the at least one photon virtually generated from the X-ray generator.

The GPU 130 may carry out (e.g. process) a simulation.

Carrying out a simulation may refer to calculating movement of a photon.

A simulation refers to a procedure used for a simulation of a stochastic system for the purpose of decision making in an uncertain situation. By performing the simulation, unpredicted movement of a photon may be calculated.

The core 140 may calculate movement of a photon generated from the X-ray generator. The movement of the photon may refer to a series of movements in which the photon passes through an object and is detected by a detector.

In other words, the GPU 130 may control, using the core 140, movement of the at least one photon from the X-ray generator to the object.

Each of the at least one photon may store information on scattering. The information on scattering may include information regarding whether the at least one photon passes through the object or whether scattering of the at least one photon occurs in the object.

The core 140 may determine photoelectric absorption (e.g., the amount of absorption of X-ray energy by for example, different tissues of the object which can cause differences in electromagnetic energy arriving at the film), and may control movement of the at least one photon.

The core 140 may determine a movement distance of the at least one photon in the object, based on an attenuation coefficient of the object. The attenuation coefficient can be used to determine how easily the object can be penetrated by the radiation.

Additionally, the core 140 may calculate the amount of scattering of the at least one photon.

The core 140 may calculate a location of the at least one photon reaching the detector, based on a result of calculating the scattering.

Specifically, the core 140 may compute a scattering angle for the at least one photon.

Additionally, the core 140 may update a three-dimensional (3D) direction vector based on the computed scattering angle.

Subsequently, the core 140 may calculate a Compton scattering value and a Rayleigh scattering value, using the updated 3D direction vector, and may generate scattering data based on the calculated Compton scattering value and the calculated Rayleigh scattering value.

In other words, the core 140 may randomly determine a scattering angle upon the occurrence of scattering, and may calculate a momentum of a photon based on the determined scattering angle.

The core 140 may substitute the calculated momentum into a value of scattering, and may add the Compton scattering value and the Rayleigh scattering value.

In this instance, the value of the scattering may refer to a probability that a photon may move at a corresponding scattering angle.

When photons are detected by the detector, the core 140 may terminate the simulation.

When the simulation is terminated, the core 140 may acquire prompt data and scattering data.

The prompt data may refer to all data stored regardless of whether scattering occurs, and the scattering data may refer to data including only information associated with occurrence of scattering.

The core 140 may determine whether the at least one photon is scattered. When the at least one photon is determined to be scattered, the core 140 may store the scattering data.

Specifically, the core 140 may store scattering information of the at least one photon, and may determine whether the at least one photon is scattered, based on the stored scattering information. When the at least one photon is determined to be scattered, the core 140 may store the scattering data.

According to an exemplary embodiment, the controller 120 and the GPU 130 can be in the same unit, or can be units that partially overlap.

The controller 120 may compare measured data with prompt data, and may calculate a scale constant with a very small error.

Additionally, the controller 120 may multiply the calculated scale constant by X-ray scattering data, and may acquire final X-ray scattering data.

The X-ray scattering estimation and reconstruction apparatus 100 may reconstruct an image using the acquired X-ray scattering data.

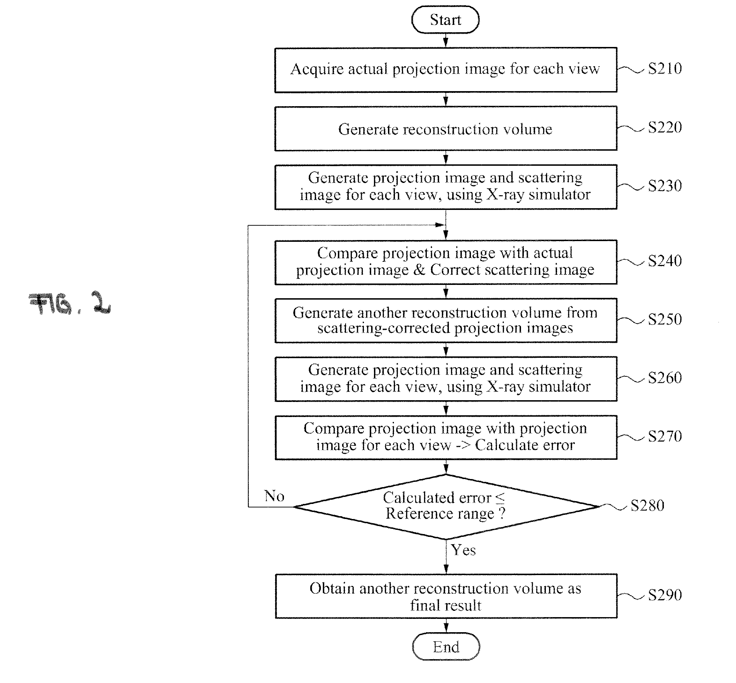

FIG. 2 is a flowchart illustrating an X-ray scattering estimation and reconstruction method using X-ray scattering data according to an exemplary embodiment.

In the X-ray scattering estimation and reconstruction method of FIG. 2, X-ray penetration data (or a projection image) generated by measuring an object may be acquired via a wired or wireless network.

Referring to FIG. 2, in operation S210, a projection image generated for reconstruction of a tomographic image may be acquired for each location of an X-ray source, namely, for each view. For example, there may be multiple views of an object where the object is X-rayed at various locations.

In operation S220, a reconstruction volume may be generated from the acquired projection image. In this instance, in the reconstruction volume, scattering may not be corrected.

Specifically, the reconstruction volume generated in operation S220 may refer to a 3D reconstruction volume, namely, an image reconstructed from images in which scattering occurs. In other words, the reconstruction volume generated in operation S220 may be an image that is merely reconstructed prior to calculating scattering, that is, the scattering of the reconstruction volume may not be corrected.

In operation S230, a projection image and scattering data (namely, a scattering image) may be generated for each view, by using an X-ray simulator.

For example, in operation S230, a projection image similar to the actual projection image acquired in S210 may be generated through a simulation, using the reconstruction volume generated in S220.

All of operations S210 through S230 may be referred to as a 'simulation.'

In operation S230, modeling of an X-ray scattering phenomenon may be performed, and a simulator used to generate an X-ray image may be used.

For example, a Monte Carlo (MC) simulator may be used to generate an X-ray image.

Accordingly, it is possible to distinguish between an image in which an X-ray is scattered, namely scattering data, from an image in which an X-ray is not scattered, namely prompt data, with respect to each of the projection image and scattering image that are generated in 230.

Since the reconstruction volume generated in operation S220 typically exhibits a low reconstruction accuracy, each of scattering data and prompt data that are acquired by a simulator based on the reconstruction volume may also show a low accuracy.

In operation S240, the projection image generated using the X-ray simulator in operation S230 may be compared with the actual projection image acquired in operation S210, and the scattering image generated in operation S230 may be corrected.

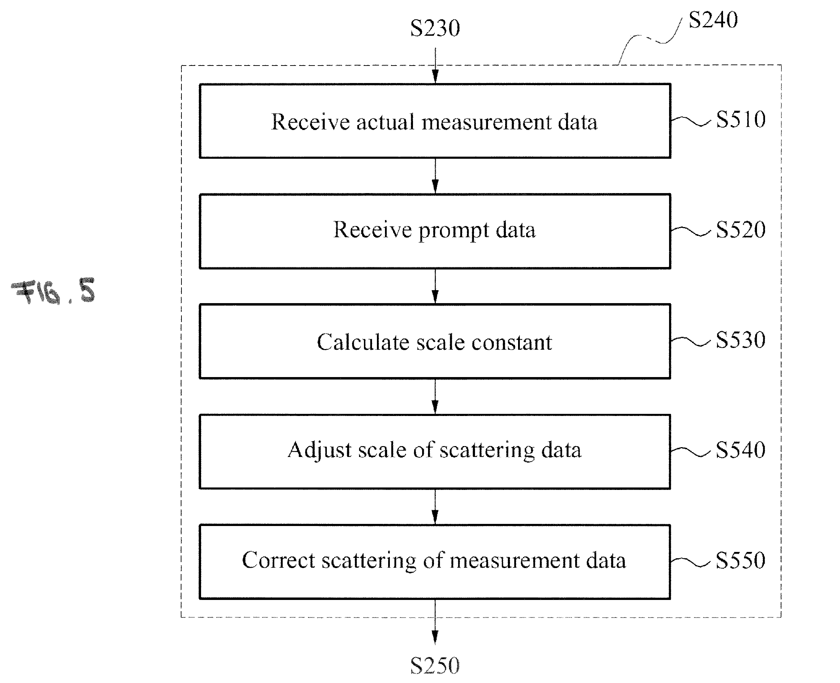

Operation S240 will be further described with reference to FIG. 5.

Additionally, in operation S240, scattering-corrected projection images may be acquired.

In operation S250, another reconstruction volume may be generated from the scattering-corrected projection images.

In operation S260, a projection image and a scattering image may be generated for each view, using a simulator used to generate an X-ray image, in the same manner as operation S230.

In operation S270, the projection image generated using the X-ray simulator in operation S260 may be compared with the actual projection image acquired in operation S210, for each view, and may calculate an error.

In this instance, the error may be calculated in both an image in which scattering occurs and in an image in which scattering is corrected.

Additionally, an error may typically be calculated based on a difference between images. However, to calculate the error, all schemes of determining similarity between two pieces of data, for example a correlation, a mean square error, a ratio and the like, may be used.

In operation S280, it is determined whether the calculated error is equal to or less than a reference range that is set in advance.

When the calculated error is determined to exceed the reference range in operation S280, the X-ray scattering estimation and reconstruction method may revert to operation S240.

When the calculated error is determined to be equal to or less than the reference range in operation S280, operation S290 may be performed.

In other words, in operation S280, whether operations S240 through S270 are to be repeated may be determined.

For example, a number of times operations S240 through S270 are repeated may be set, and operations S240 through S270 may be repeated the set number of times. Every time operations S240 through S270 are repeated, a difference between errors may be changed to be equal to or less than, or greater than a predetermined level, or may be changed in a predetermined condition. In this example, repeating operations S240 through S270 may be interrupted.

In operation S290, the reconstruction volume generated in operation S250 may be obtained as a final result.

Additionally, when a separate scattering image is required, a scattering-corrected projection image, namely prompt data, may be differentiated from the actual projection image acquired in operation S210, and a final scattering image may be generated.

Only the final scattering image may be obtained by skipping operation S290.

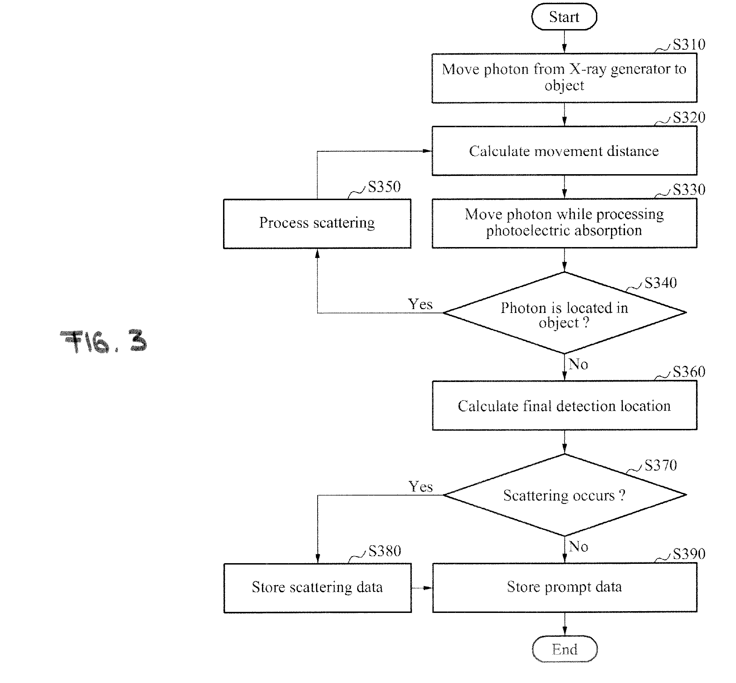

FIG. 3 is a flowchart illustrating a simulation according to an exemplary embodiment.

FIG. 3 illustrates processing a unit photon. As shown in FIG. 3, a plurality of cores in a GPU may simultaneously process a plurality of photons.

Referring to FIG. 3, in operation S310, a photon may be moved from an X-ray generator to a surface of an object.

In this instance, the photon may pass through air, and accordingly scattering may be assumed not to occur. Additionally, the photon may include both 3D location information and 3D direction information.

A location of the X-ray generator may be interpreted as a location from which the photons are moved. A direction of the X-ray generator may be randomly determined between angles enabling dispersion of photons in the X-ray generator.

The X-ray generator may have an energy spectrum, and energy of a photon may also be randomly determined. In this instance, an initial value of the photon may have a spectrum size of an energy band.

In operation S320, a movement distance that the photons are to move in the object may be randomly calculated.

The movement distance may be randomly calculated, and a constant to be multiplied may be changed based on a type of a material. Specifically, the movement distance may be calculated based on an attenuation coefficient of the material.

In operation S330, the photon may be moved to the movement distance while photoelectric absorption is processed.

The photoelectric absorption may be determined based on the type of the material and energy of the photon. While the amount of photoelectric absorption is determined, a value associated with a corresponding material may be read from a stored table. For example, the stored table may include absorption values corresponding to various types of materials used for obtaining an X-ray image. Movement of the photon may be calculated by updating a 3D location of the photon.

In operation S340, it is determined whether the photon, which has moved, is located in the object.

When the photon is determined to be located in the object in operation S340, a location of the photon may be determined to be a location where scattering occurs, and scattering may be determined in operation S350.

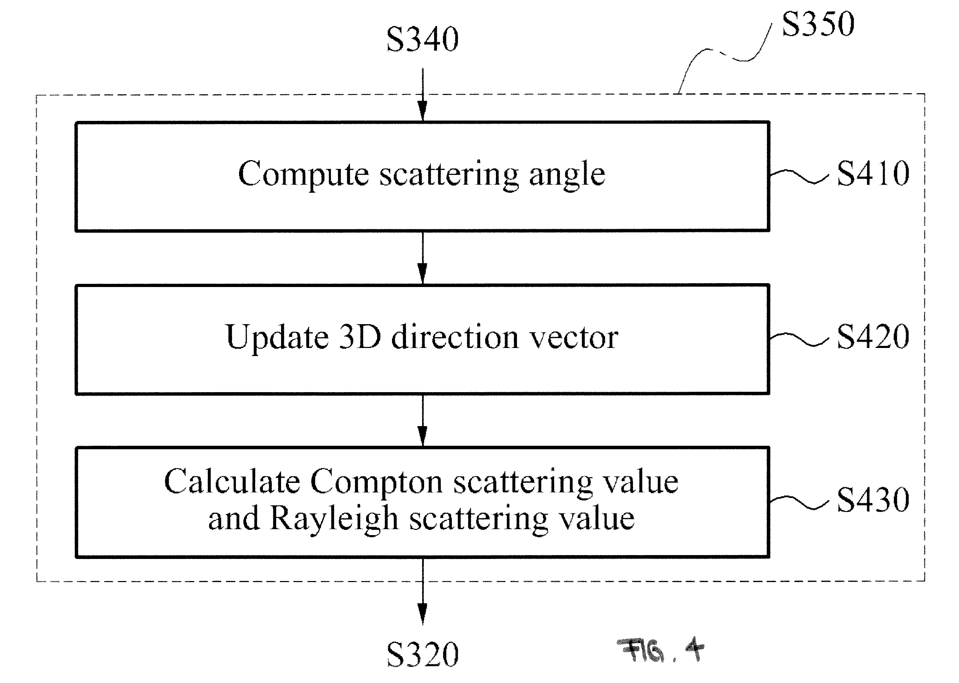

Operation S350 will be further described with reference to FIG. 4.

Conversely, when it is determined that the photon is not located in the object in operation S340, that is, when the photon is located outside the object, for example, the photon has passed through the object, processing of movement of photon may be terminated.

A determination as to whether the photon, which has passed through the object, reaches a detector may be determined regardless of whether scattering occurs. When the photon is determined to reach the detector, a final detection location in which the photon is finally detected may be calculated in operation S360.

In operation S370, a determination as to whether scattering occurs may be based on a stored variable containing information on the occurrence or nonoccurrence of the scattering.

When it is determined that scattering occurs in operation S370, scattering data may be stored in operation S380.

When it is determined that scattering does not occur, prompt data may be stored regardless of whether scattering occurs in operation S390.

Since the prompt data may be compared with actual obtained measurement data and may be used to adjust a scale, the actual measurement data may also include all values of the scattering.

FIG. 4 is a flowchart illustrating operation operation S350 of FIG. 3.

Referring to FIG. 4, in operation S410, to determine scattering of a photon, a scattering angle of the photon may be randomly computed.

There is no limitation to the scattering angle of the photon. However, when the photon is not likely to reach a detector based on a final scattering angle, the next step in the determination may be terminated.

In operation S420, a current 3D direction vector may be updated in a direction in which scattering occurs, based on the computed scattering angle.

In operation S430, a Compton scattering value and a Rayleigh scattering value may be calculated.

The calculated Compton scattering value and the calculated Rayleigh scattering value may be multiplied by a final photon value, and may refer to a probability that a photon may move at a corresponding scattering angle.

FIG. 5 is a flowchart illustrating operation S240 of FIG. 2 in more detail. Specifically, FIG. 5 illustrates a adjusting a scale of X-ray scattering data.

Referring to FIG. 5, to adjust a scale of X-ray scattering data, actual measurement data may be received in operation S5 10.

In operation S520, prompt data acquired through a simulation may be received, for example, by a GPU.

In operation S530, a scale constant may be calculated by comparing virtual prompt data with the actual measurement data. The scale constant may enable the virtual prompt data to have the same scale as actual prompt data.

In operation S540, scattering data acquired through a simulation may be multiplied by the calculated scale constant, and a scale of the scattering data may be adjusted to be the same as the actual measurement data.

In operation S550, scattering of measurement data may be corrected by subtracting the scattering data from the actual measurement data.

According to exemplary embodiments, there is provided an X-ray scattering estimation method and apparatus that may reduce a processing time using parallel processing.

Additionally, according to exemplary embodiments, there is provided an apparatus and method that may generate scattering data using a simulation based on parallel processing of a GPU.

Exemplary embodiments may be applied to all apparatuses using an X-ray penetrating a body, and in particular, may be applied in a computed tomography, a digital breast tomosynthesis, a mammography, and the like that utilizes X-rays.

Furthermore, according to exemplary embodiments, there is provided a method and apparatus that may use a GPU at a speed hundred times faster than the conventional art which is used to estimate X-ray scattering using a known Monte-Carlo (MC) simulation.

Moreover, according to exemplary embodiments, there is provided an X-ray scattering estimation method and apparatus that may use a simulation with a speed increased to a clinically available level.

The X-ray scattering estimation and reconstruction method according to the above-described exemplary embodiments may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape, optical media such as CD ROM disks and DVDs, magneto-optical media, such as optical disks, and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments, or vice versa.

Although a few exemplary embodiments have been shown and described, the exemplary embodiments are not limited thereto. It would be appreciated by those skilled in the art that changes may be made to these exemplary embodiments without departing from the principles of the disclosure, the scope of which is defined by the claims.

## Claims

1. An apparatus for X-ray scattering estimation and reconstruction, the apparatus comprising:
a receiver which receives X-ray penetration data through a wired or wireless network, wherein the X-ray penetration data is generated by measuring an object; and
a graphics processing unit (GPU) which acquires, from the received X-ray penetration data, a reconstructed image in which scattering is corrected.

2. The apparatus of claim 1, wherein the GPU comprises at least one core to process in parallel at least one of movement, scattering and detection of at least one photon generated from an X-ray generator, and wherein the at least one photon is assigned to the at least one core.

3. The apparatus of claim 2, wherein the at least one core controls movement of the at least one photon from the X-ray generator to the object;
wherein, preferably, the at least one core randomly determines a movement distance which indicates an amount of movement of the at least one photon in the object.

4. The apparatus of claim 2, wherein the at least one core determines an amount of photoelectric absorption, and controls the movement of the at least one photon.

5. The apparatus of claim 2, wherein the at least one core determines an amount of scattering of the at least one photon.

6. The apparatus of claim 5, wherein the at least one core randomly computes a scattering angle of the at least one photon, updates a three-dimensional (3D) direction vector based on the computed scattering angle, calculates a Compton scattering value and a Rayleigh scattering value using the updated 3D direction vector, and generates scattering data based on the calculated Compton scattering value and the calculated Rayleigh scattering value.

7. The apparatus of claim 5, wherein the at least one core calculates a location of the at least one photon received by a detector, based on a result of the processing the scattering.

8. The apparatus of claim 2, wherein the at least one core determines whether the at least one photon is scattered, and when the at least one photon is determined to be scattered, stores scattering data of the at least one photon;
wherein, preferably, the at least one core stores scattering information of the at least one photon, determines whether the at least one photon is scattered based on the stored scattering information, and if the at least one photon is determined to be scattered, stores the scattering data.

9. The apparatus of one of claims 1 to 8, wherein the GPU acquires an image from the received X-ray penetration data, and performs a simulation on the acquired image.

10. The apparatus of claim 9, wherein the GPU generates an X-ray scattering image from the image on which the simulation is performed, and corrects the X-ray penetration data based on the generated X-ray scattering image.

11. The apparatus of claim 10, wherein the GPU acquires the reconstructed image from the corrected X-ray penetration data.

12. The apparatus of claim 10, wherein the GPU compares the X-ray penetration data with prompt data acquired through the simulation, calculates a scale constant, adjusts a scale of received scattering data, subtracts the received scattering data from the X-ray penetration data, and corrects scattering;
wherein, preferably, the GPU generates the X-ray scattering image from the acquired image, and corrects the X-ray penetration data based on the generated X-ray scattering image.

13. A method for X-ray scattering estimation and reconstruction, the method comprising:
receiving X-ray penetration data through a wired or wireless network, wherein the X-ray penetration data is generated by measuring an object;
acquiring an image from the received X-ray penetration data;
performing a simulation on the acquired image;
generating an X-ray scattering image from the image on which the simulation is performed, and correcting the X-ray penetration data based on the generated X-ray scattering image; and
acquiring, from the corrected X-ray penetration data, a reconstructed image in which scattering is corrected.

14. The method of claim 13, further comprising:
assigning at least one photon to at least one core, wherein the at least one photon is virtually generated from an X-ray generator; and
processing, using the at least one core, in parallel at least one of movement, scattering and detection of the at least one photon.

15. A non-transitory computer readable recording medium storing a program to cause a computer to implement a method according to claim 13 or 14.
